# EUROPÄISCHE PATENTSCHRIFT

(11) **EP 0 677 728 B1**
(45) Veröffentlichungstag und Bekanntmachung des Hinweises auf die Patenterteilung: **01.07.1998**
(21) Anmeldenummer: 95105334.7
(22) Anmeldetag: 08.04.1995
(51) Int. Cl.: G01M 3/04

(54) **Verfahren zum Prüfen von Feuerwehrschläuchen**
Test procedure for fire hoses
Procédé d'essai des tuyaux d'incendie

(30) Priorität: 16.04.1994 DE 4413273
(43) Veröffentlichungstag der Anmeldung: 18.10.1995
(73) Patentinhaber: Hafenrichter, Karl, D-31749 Auetal (DE); Holtmannspötter, Alfons, D-30890 Barsinghausen (DE); Bormann, Heinz, D-31749 Auetal (DE)
(72) Erfinder: Hafenrichter, Karl, D-31749 Auetal (DE); Holtmannspötter, Alfons, D-30890 Barsinghausen (DE); Bormann, Heinz, D-31749 Auetal (DE)
(74) Vertreter: Braun, Dieter, Dipl.-Ing.

(56) Entgegenhaltungen:
- EP-A- 0 285 087
- US-A- 4 732 345

## Beschreibung

Die Erfindung betrifft eine Vorrichtung zum Prüfen von Feuerwehrschläuchen mit einer Schlauchaufnahme, einer Prüfpumpe und einem Füllstutzen für eine Schlauchkupplung des Feuerwehrschlauches, zum Anschließen und Füllen mit Druckwasser.

Feuerwehrschläuche müssen regelmäßig auf Beschädigungen und Undichtigkeiten überprüft werden. Zur Prüfung ist es bereits bekannt, die Feuerwehrschläuche in eine Schlauchaufnahme mit einer Länge von ca. 20 m gestreckt abzulegen und mittels einer Schlauchkupplung an einen Füllstutzen anzuschließen, über den mittels einer Prüfpumpe in den Feuerwehrschlauch Druckwasser eingedrückt wird. Vorher wird an die entgegengesetzte Schlauchkupplung des Feuerwehrschlauches ein Entlüftungsstück angeschlossen. Über das Entlüftungsstück kann die im Feuerwehrschlauch befindliche Luft entweichen, so daß der Feuerwehrschlauch mit Druckwasser gefüllt werden kann. Sobald die Luft entwichen ist, schließt das Entlüftungsstück. Nach dem Aufbau des erforderlichen Prüfdruckes in dem in der Aufnahme liegenden Feuerwehrschlauch werden dessen Wandungen überprüft. Schadhafte Stellen in der Schlauchwandung bzw. auch Undichtigkeiten werden dann markiert, so daß nach dem Trocknen des Feuerwehrschlauches die schadhafte Stelle auffindbar ist und repariert werden kann.

Das bekannte Prüfverfahren hat den Nachteil, daß die Prüfvorrichtung, d. h. insbesondere die Aufnahme für den Feuerwehrschlauch, sehr viel Raum beansprucht. Dies gilt auch für den Fall, daß die Feuerwehrschläuche nur zur Hälfte ihrer Länge in der Schlauchaufnahme abgelegt werden. Auch derartige Lösungen sind bereits bekannt. Auch hier ist es jedoch von großem Nachteil, daß die Mindestlänge der gesamten Vorrichtung ca. 12 m beträgt. Die Installation der Prüfvorrichtung erfordert einen auch hier sehr großen Raum und beansprucht eine große wertvolle Nutzfläche, die nicht überall zur Verfügung steht bzw. deren Umbauung mit hohen Kosten verbunden ist.

Bei den bekannten Prüfvorrichtungen ist es weiterhin von Nachteil, daß die Feuerwehrschläuche offen in der Schlauchaufnahme liegen und daß im Falle des Platzens eines Feuerwehrschlauches unter der Einwirkung des Prüfdruckes, die prüfenden Personen gefährdet sind. Zumindest kann es zu einer äußerst unangenehmen Durchnässung der Kleidung dieser Personen kommen. Eine Abdeckung der gesamten Schlauchlänge durch eine Schutzvorrichtung ist hier aufgrund der großen räumlichen Ausdehnung der Schlauchaufnahme und der angeschlossenen Zusatzaggregate mit vertretbaren Kosten nicht realisierbar.

Eine Prüfvorrichtung der genannten Gattung ist aus der DE 36 03 504 bekannt geworden. Die zu prüfenden Schläuche werden hier in der Wanne der Pflegestraße gestreckt abgelegt. Zusätzlich ist hier ein Schlauchschlepp- und Schlauchaufwickelwagen angeordnet, dessen Schlauchaufwickeler dient jedoch ausschließlich dem Transport, dem Schleppen der Schläuche und schließlich dem Aufwickeln der Schläuche. Die Überprüfung der Schläuche auf Undichtigkeiten bzw. verschlissene Stellen erfolgt in gestreckter Lage in der Wanne der Pflegestraße.

Der Erfindung liegt die Aufgabe zugrunde, den für die Prüfung der Feuerwehrschläuche benötigten Raum erheblich zu verkleinern und darüberhinaus eine Möglichkeit des Schutzes der prüfenden Personen zu schaffen.

Diese Aufgabe wird erfindungsgemäß durch das Merkmal des Anspruchs 1 gelöst. Die weitere Ausgestaltung der Erfindung ist den abhängigen Ansprüchen zu entnehmen.

Dadurch, daß die Schlauchaufnahme als Wickelkörper ausgebildet ist, auf dem die Fernerwehrschläuche mehrfach spiralförmig herumgeführt freiliegend aufwickelbar und nach dem Füllen mit Druckwasser überprüfbar sind, ergibt sich ein sehr platzsparender Aufbau der Vorrichtung. Es ist z. B. möglich, einen Wickelkörper einzusetzen, der einen Durchmesser von etwa 1 m - 3,5 m hat. Gegenüber den herkömmlichen Vorrichtungen ergibt sich somit eine erhebliche Platzeinsparung, und die Vorrichtung ist auch in kleinen Räumen installierbar. Gemäß einer bevorzugten Ausführungsform der Erfindung ist der Wickelkörper um eine senkrechte Achse drehbar und an seinem Außenumfang mit spiralförmig in der Wickelebene der aufzuwickelnden Feuerwehrschläuche angeordneten Auflageflächen versehen. Der Feuerwehrschlauch wird somit zwangsläufig in eine für die prüfende Person gut zugängliche Aufwickelposition geführt, in der die benachbarten Schlauchabschnitte in Abstand zueinander gehalten werden. Vorzugsweise sind dabei die Auflageflächen am Wickelkörper in radialer Richtung horizontal angeordnet, wodurch der Feuerwehrschlauch beim Aufwickel- und Abwickelvorgang gut auf den Auflageflächen gleiten kann. Der auf den Auflageflächen ruhende Feuerwehrschlauch ist dann zur Durchführung der Prüfung gut zugänglich und kann auf den Auflageflächen aufliegend, zur Überprüfung auch der Unter- und Rückseite, von dem Prüfer ausreichend bewegt werden. Alternativ kann der Wickelkörper auch auf einer waagerecht oder schräg angeordneten Achse drehbar geführt sein. Der Wickelkörper ist im übrigen vorzugsweise als von Rohren gebildeter offener Körper ausgebildet, so daß der zu prüfende, auf dem Wickelkörper aufgewickelte Feuerwehrschlauch von allen Seiten gut sichtbar ist.

Gemäß einem kennzeichnenden Merkmal des Anspruchs 1 ist es vorgesehen, daß der Wikkelkörper von einer Schutzwand aus durchsichtigem Material umschlossen ist. Diese Schutzwand bewirkt, daß der Prüfer bei einem möglichen Platzen eines zu prüfenden Feuerwehrschlauches in der Phase der Einleitung des Druckwassers gegen Verletzungen und ein Durchnässen seiner Kleidung gut geschützt ist. Die Schutzwand kann beispielsweise aus einem Panzerglas bzw. auch aus einem durchsichtigen Kunststoffmaterial bestehen und ermöglicht eine Sichtprüfung der Feuerwehrschläuche. In der Schutzwand vorgesehene verschließbare Arbeitsöffnungen ermöglichen dem Prüfer zudem, falls erforderlich, ein Bewegen und Markieren des Feuerwehrschlauches während der Prüfung. Die Arbeitsöffnungen werden jeweils nur kurzzeitig geöffnet und sind im Regelfall geschlossen. Ein optimaler Schutz des Prüfers ist somit sichergestellt.

In weiterer Ausgestaltung der Erfindung ist es vorgesehen, im Einzugsbereich des Feuerwehrschlauches auf den Wickelkörper einen Abrolltisch vorzusehen, auf den die Schlauchwickel der zu prüfenden Feuerwehrschläuche vor dem Aufwickeln abgelegt werden. Der Abrolltisch ist vorzugsweise synchron mit der Wickelbewegung des Wickelkörpers, parallel zu dessen Längsachse verfahrbar.

Sofern der Abrolltisch um eine senkrechte Achse drehbar ist, ist der Abrolltisch synchron mit der Wickelbewegung des Wickelkörpers absenkbar. Es wird so erreicht, daß der Schlauchwickel des zu prüfenden Feuerwehrschlauches sich bereits jeweils in Höhe seiner Auflagefläche des Wickelkörpers befindet. Der Feuerwehrschlauch wird folglich beim Aufwickeln allenfalls geringfügig nach oben gezogen, so daß die erforderlichen Antriebskräfte am Wickelkörper relativ gering sind. Insbesondere wird durch einen synchron der Wickelbewegung des Wickelkörpers folgenden Abrolltisch der Aufrollvorgang des Feuerwehrschlauches insgesamt beschleunigt. Letztlich ergibt sich zusätzlich eine schonende Behandlung der Feuerwehrschläuche. Von Vorteil kann es weiterhin sein, wenn vor dem Wickelkörper eine Hochdruckwaschvorrichtung für die aufzuwickelnden und zu prüfenden Feuerwehrschläuche angeordnet ist.

In weiterer Ausgestaltung der Erfindung ist neben dem Wickelkörper eine Abrollvorrichtung angeordnet, über die die Feuerwehrschläuche beim Abrollen vom Wickelkörper geführt in eine Ablage gelenkt werden. Hierdurch wird die Handhabung der Feuerwehrschläuche zusätzlich vereinfacht.

Von weiterem großen Vorteil ist es, wenn an der Vorrichtung ein Prüfwasserbehälter mit einem Füllstutzen für die Feuerwehrschläuche vorgesehen ist, an dem eine Prüfpumpe angeordnet ist, mittels der Druckwasser in die angeschlossenen Feuerwehrschläuche gedrückt werden kann. Nach Beendigung der Prüfung kann somit das Druckwasser in den Prüfwasserbehälter zurückgeführt werden, so daß es für weitere Prüfungen zur Verfügung steht. Der Wasserverbrauch bei der Prüfung kann aufgrund der Anordnung eines Prüfwasserbehälters in vorteilhafter Weise sehr klein gehalten werden.

In der Zeichnung ist eine Ausführungsbeispiel der Erfindung dargestellt und wird im folgenden beschrieben. Es zeigen:

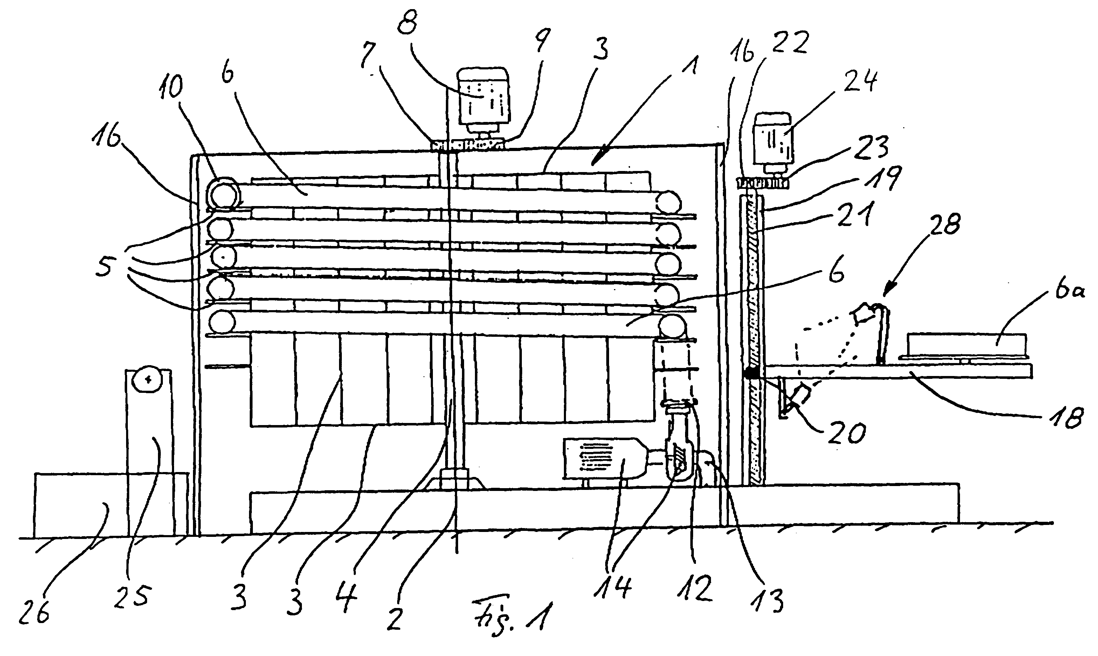

Figur 1 eine Vorrichtung zum Prüfen von Feuerwehrschläuchen in der Seitenansicht;

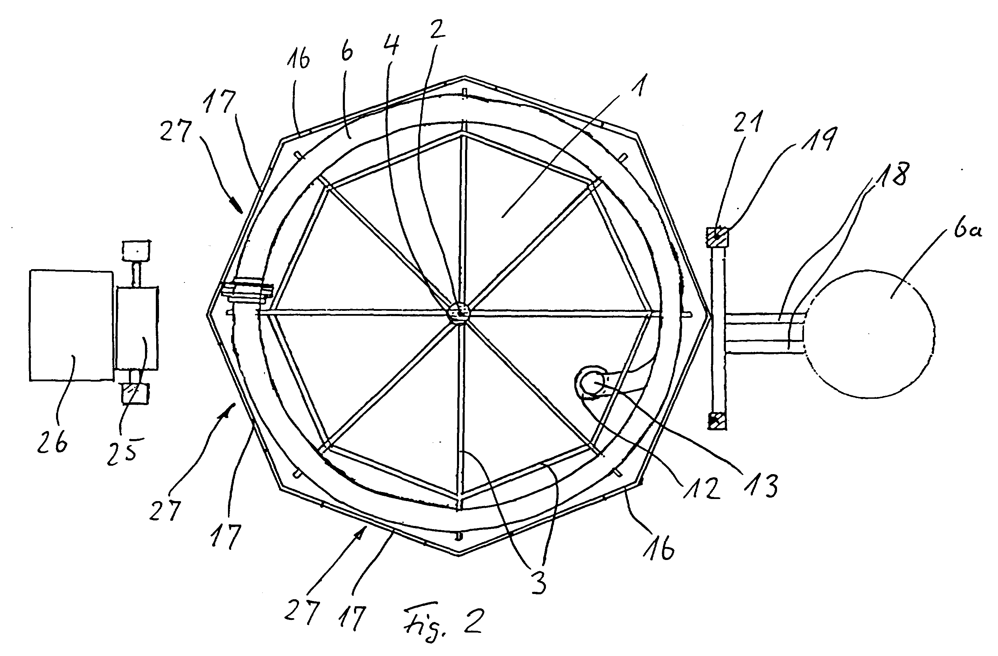

Figur 2 die Vorrichtung gemäß Figur 1 in einer Ansicht auf die Oberseite.

In der Zeichnung ist mit 1 ein Wickelkörper bezeichnet, der um eine senkrecht angeordnete Achse 2 drehbar ist. Der Wickelkörper 1 ist als Rohrkonstruktion ausgebildet, wobei dessen Rohre 3 miteinander fest verbunden und an eine zentrale Antriebswelle 4, die auf der senkrechten Achse 2 angeordnet ist, geführt sind. An den Rohren 3 des Wickelkörpers 1 sind am Außenumfang Auflageflächen 5 spiralförmig in einer Wickelebene eines aufzuwickelnden Feuerwehrschlauches 6 angeordnet. Die Auflageflächen 5 verlaufen in radialer Richtung horizontal.

Auf der zentralen Antriebswelle 4 ist ein Antriebszahnrad 7 angeordnet, das mit einem von einem Antriebsmotor 8 angetriebenen Antriebsritzel 9 in Eingriff steht. Eine am oberen Ende des auf den Wickelkörper 1 aufgewickelten Feuerwehrschlauches 6 angeordnete Schlauchkupplung 10 ist zur Prüfung mittels eines Entlüftungsstücks verschlossen. An seiner unteren Schlauchkupplung 12 ist der Feuerwehrschlauch 6 an einen Füllstutzen 13 angeschlossen. Am Füllstutzen 13 ist eine Prüfpumpe 14 angeordnet, mittels der Druckwasser in den Feuerwehrschlauch 6 gefördert und dort ein Prüfdruck aufgebaut werden kann. Der Füllstutzen 13 ist an einen Prüfwasserbehälter der Vorrichtung geführt.

Der Wickelkörper 1 der Vorrichtung ist von einer Schutzwand 16 aus durchsichtigem Material umschlossen. In der Schutzwand 16 sind durch Klappen 17 verschließbare Arbeitsöffnungen vorgesehen. Im Zuführungsbereich des Feuerwehrschlauches 6 ist am Wickelkörper 1 ein Abrolltisch 18 angeordnet, auf dem die Feuerwehrschläuche 6 als Schlauchwickel 6a vor dem Aufwickeln auf den Wickelkörper 1 abgelegt werden können. Der Abrolltisch 18 ist an einem Ständer 19 in vertikaler Richtung verschiebbar angeordnet. Eine am Abrolltisch 18 angeordnete Spindelmutter 20 greift in eine in dem Ständer 19 senkrecht angeordnete Spindel 21 ein. An der Oberseite der Spindel 21 ist ein Zahnrad 22 angeordnet, das mit einem Ritzel 23 eines Antriebsmotors 24 in Eingriff steht. Der Antrieb des Antriebsmotors 24 erfolgt synchron zum Antrieb des Antriebsmotors 8 des Wickelkörpers 1, so daß es mittels der Spindel 21 möglich ist, den Abrolltisch 18 synchron zur Drehbewegung des Wickelkörpers 1 abzusenken. Es wird so erreicht, daß sich der Schlauchwickel 6a des zu prüfenden Feuerwehrschlauches 6 während des Aufwickelvorganges jeweils in der Höhe seiner Auflagefläche 5 am Wickelkörper 1 befindet. Der Feuerwehrschlauch 6 wird folglich beim Aufwickeln allenfalls geringfügig nach oben gezogen, so daß am Wickelkörper 1 relativ geringe Antriebskräfte erforderlich sind. Gegebenenfalls kann sich der Schlauchwickel 6a auch oberhalb der jeweiligen Auflagefläche 5 am Wickelkörper 1 befinden, so daß der Feuerwehrschlauch 6 dann abwärts auf die jeweilige Auflagefläche 5 gleitet.

Am Wickelkörper 1 ist außerdem eine Abrollvorrichtung 25 vorgesehen. Über die Abrollvorrichtung 25 werden die Feuerwehrschläuche 6 beim Abrollen vom Wickelkörper 1 geführt in einen Ablagekasten 26 geleitet. Vor dem Wickelkörper 1 ist hinter dem Abrolltisch 18 eine Hochdruckwaschvorrichtung 28 für die aufzuwickelnden und zu prüfenden Feuerwehrschläuche 6 angeordnet.

Zur Prüfung wird der Feuerwehrschlauch 6 in Form eines üblichen Schlauchwickels 6a auf dem Abrolltisch 18 abgelegt. Sodann wird die Schlauchkupplung 10 am vorderen Ende des Feuerwehrschlauches 6 am Wickelkörper 1 in dessen oberen Bereich befestigt. Außerdem wird an der Schlauchkupplung 10 ein Entlüftungsstück befestigt. Der Wickelkörper 1 wird sodann mittels des Antriebsmotors 8 über die zentrale Antriebswelle 4 angetrieben in eine Rotationsbewegung versetzt. Gleichzeitig wird synchron zu dem Antriebsmotor 8 auch der Antriebsmotor 24 des Abrolltisches 18 in Betrieb gesetzt. Es wird somit erreicht, daß der Feuerwehrschlauch 6 auf den Wickelkörper 1 spiralförmig, auf den Auflageflächen 5 aufliegend, aufgewickelt wird. Gleichzeitig wird der Abrolltisch 18 entsprechend der spiralförmigen Aufwickelbewegung des Feuerwehrschlauches 6 abgesenkt. Es ist somit sichergestellt, daß der Schlauchwickel des Feuerwehrschlauches 6 sich stets in etwa der Ebene der jeweils tragenden Auflagefläche 5 des Wickelkörpers 1 befindet. Hierdurch wird eine im wesentlichen horizontale Abzugsbewegung des Feuerwehrschlauches 6 vom Abrolltisch 18 erreicht. Der Antriebsmotor 8 des Wickelkörpers 1 kann daher relativ klein ausgelegt sein.

Sobald der Feuerwehrschlauch 6 in seiner ganzen Länge auf den Wickelkörper 1 aufgewickelt ist, wird dessen untere Schlauchkupplung 12 an den Füllstutzen 13 angeschlossen. Die Antriebsmotoren 8 und 24 wurden vorher mit der Beendigung der Aufwickelbewegung des Feuerwehrschlauches 6 abgeschaltet. Mittels der Prüfpumpe 14 wird nunmehr Wasser aus dem Prüfwasserbehälter in den Feuerwehrschlauch 6 gefördert. Das an der Schlauchkupplung 10 des Feuerwehrschlauches 6 angeordnete Entlüftungsstück läßt die im Feuerwehrschlauch 6 befindliche Luft entweichen, bis das Wasser an das Entlüftungsstück gelangt. Zu diesem Zeitpunkt schließt das Entlüftungsstück, so daß sich im Feuerwehrschlauch 6 der für die Prüfung erforderliche Druck aufbauen kann. Die Prüfpumpe 14 fördert Druckwasser in den Feuerwehrschlauch 6 bis der erforderliche Prüfdruck erreicht ist.

Dem Prüfer ist es nunmehr möglich, den auf den Auflageflächen 5 des Wickelkörpers 1 aufliegenden Feuerwehrschlauch 6 auf Beschädigungen und Undichtigkeiten zu prüfen. Da der Wickelkörper 1 als offene Rohrkonstruktion ausgebildet ist und aus Rohren 3 z. B. zusammengeschweißt wurde, ist der aufgewickelte Feuerwehrschlauch 6 von allen Seiten gut sichtbar. Hierbei ist es auch von Bedeutung, daß der Feuerwehrschlauch 6 auf den Auflageflächen 5 ruht und daß die einzelnen Lagen des spiralförmig aufgewickelten Feuerwehrschlauches 6 in Abstand zueinander angeordnet sind.

Die um den Wickelkörper 1 herum aufgebaute durchsichtige Schutzwand 16 schützt den Prüfer vor Verletzungen im Falle des Platzens des zu prüfenden Feuerwehrschlauches 6. Desweiteren wird ein Durchnässen der Kleidung des Prüfers aufgrund von Undichtigkeiten bzw. bei einem eventuellen Platzen des Feuerwehrschlauches 6 verhindert. In der Schutzwand 16 angeordnete Klappen 17 können geöffnet werden und ermöglichen über Arbeitsöffnungen einen Zugang zu dem auf dem Wickelkörper 1 befindlichen Feuerwehrschlauch 6. Der Prüfer kann durch die Arbeitsöffnungen hindurchgreifen und den Feuerwehrschlauch 6 an beschädigten Stellen markieren, so daß hier später eine Reparatur vorgenommen werden kann. Desweiteren kann der Feuerwehrschlauch 6 gegebenenfalls auch auf den Auflagenflächen 5 etwas verdreht werden, so daß beschädigte Stellen besser erkennbar sind.

Nach Abschluß der Prüfung wird das in dem Feuerwehrschlauch 6 befindliche Druckwasser über den Füllstutzen 13 in den Prüfwasserbehälter abgelassen. Infolge des Druckabfalls öffnet das an der Schlauchkupplung 10 angebrachte Entlüftungsstück so daß das Wasser vollständig abfließen kann. Das Wasser steht dann im Prüfwasserbehälter für nachfolgende Prüfungen zur Verfügung. Nach dem Abfließen des Wassers wird der Feuerwehrschlauch 6 von dem Wickelkörper 1 angewickelt, wobei der Feuerwehrschlauch 6 über die Abrollvorrichtung 25 geführt wird. Der Feuerwehrschlauch 6 gelangt dann in einen Ablagekasten 26, mittels dem er zum Trocknen und zur Reparatur abtransportiert werden kann. Gegebenenfalls ist es auch möglich, hinter der erfindungsgemäßen Vorrichtung zum Prüfen von Feuerwehrschläuchen eine an sich bekannte Schlauchtrocken-Vorrichtung anzuordnen. Der Feuerwehrschlauch 6 kann dann gegebenenfalls von dem Wickelkörper 1 sofort in die Schlauchtrocken-Vorrichtung geführt werden.

Die erfindungsgemäße Vorrichtung zeichnet sich durch einen vergleichsweise extrem geringen Platzbedarf aus. Die Vorrichtung kann also auch in kleinen vorhandenen Räumen installiert werden. Die Bereitstellung der bisher erforderlichen, sehr großen Prüfräume entfällt. Außerdem ergibt sich der Vorteil, daß der Prüfer durch die aufgrund der geringen Abmessungen des Wickelkörpers 1 gut zu installierende Schutzwand vor Verletzungen bzw. auch vor einem unangenehmen Durchnässen, im Falle eines Defektes am zu prüfenden Feuerwehrschlauch 6, geschützt ist. Aus der Anordnung des Prüfwasserbehälters in der Vorrichtung ergibt sich zudem der Vorteil eines in der Regel sehr geringen Wasserverbrauchs.

## Patentansprüche

1. Vorrichtung zum Prüfen von Feuerwehrschläuchen (6) mit einer Schlauchaufnahme, einer Prüfpumpe (14) und einem Füllstutzen (13) für eine Schlauchkupplung (12) des Feuerwehrschlauches (6), zum Anschließen und Füllen mit Druckwasser, dadurch gekennzeichnet, daß die Schlauchaufnahme als Wickelkörper (1) ausgebildet ist, der an seinem Außenumfang mit spiralförmig in der Wickelebene der aufzuwickelnden Feuerwehrschläuche (6) angeordneten Auflageflächen (5) versehen ist, und daß eine Schutzwand (16) aus durchsichtigem Material vorhanden ist zum Umschließen des Wickelkörpers (1).

2. Vorrichtung nach Anspruch 1, dadurch gekennzeichnet, daß der Wickelkörper (1) um eine senkrechte Achse (2) drehbar ist.

3. Vorrichtung nach den Ansprüchen 1 und 2, dadurch gekennzeichnet, daß die Auflageflächen (5) am Wickelkörper (1) in radialer Richtung horizontal verlaufend angeordnet sind.

4. Vorrichtung nach nach mindestens einem der vorhergehenden Ansprüche, dadurch gekennzeichnet, daß der Wickelkörper (1) als von Rohren (3) gebildeter offener Körper ausgebildet ist.

5. Vorrichtung nach mindestens einem der vorhergehenden Ansprüche, dadurch gekennzeichnet, daß der Wickelkörper (1) einen Durchmesser von etwa 1 m - 3,5 m hat.

6. Vorrichtung nach mindestens einem der vorhergehenden Ansprüche, dadurch gekennzeichnet, daß in der Schutzwand (16) durch Klappen (17) verschließbare Arbeitsöffnungen (27) vorgesehen sind.

7. Vorrichtung nach mindestens einem der vorhergehenden Ansprüche, dadurch gekennzeichnet, daß ein Abrolltisch (18) vorgesehen ist, auf den Schlauchwickel (6a) der zu prüfenden Feuerwehrschläuche (6) vor dem Aufwickeln auf den Wickelkörper (1) abgelegt werden.

8. Vorrichtung nach mindestens einem der vorhergehenden Ansprüche, dadurch gekennzeichnet, daß dem Abrolltisch (18) Mittel zugeordnet sind, so daß der Abrolltisch (18) synchron mit der Wickelbewegung des Wickelkörpers (1) parallel zu dessen Längsachse verfahrbar ist.

9. Vorrichtung nach mindestens einem der vorhergehenden Ansprüche, dadurch gekennzeichnet, daß dem Abrolltisch (18) Mittel zugeordnet sind, so daß der Abrolltisch (18) synchron mit der Wickelbewegung des Wickelkörpers (1) absenkbar ist.

10. Vorrichtung nach mindestens einem der vorhergehenden Ansprüche, dadurch gekennzeichnet, daß vor dem Wickelkörper (1) eine Hochdruckwaschvorrichtung (28) für die aufzuwickelnden und zu prüfenden Feuerwehrschläuche (6) angeordnet ist.

11. Vorrichtung nach mindestens einem der vorhergehenden Ansprüche, dadurch gekennzeichnet, daß eine Abrollvorrichtung (25) vorgesehen ist, über die die Feuerwehrschläuche (6) beim Abrollen vom Wickelkörper (1) geführt in einen Ablagekasten (26) gelenkt werden.

12. Vorrichtung nach mindestens einem der vorhergehenden Ansprüche, dadurch gekennzeichnet, daß ein Prüfwasserbehälter mit einem Füllstutzen (13) für die Feuerwehrschläuche (6) vorgesehen ist, an dem eine Prüfpumpe (14) angeordnet ist, mittels der Druckwasser in die angeschlossenen Feuerwehrschläuche (6) gedrückt werden kann.

## Claims

1. An arrangement for the testing of fire brigade hoses (6) with a hose receptor, a test pump (14) and a filling nozzle (13) for a hose coupler (12) of the fire hose (6), for connection and filling with water under pressure, characterised in that the hose receptor is configured as a winding frame (1), which is provided with spiral formed supporting surfaces (5) arranged around its outer circumference for the fire hose (6) to be wound on, and that a protective wall (16) made of transparent material is present to enclose the winding frame (1)

2. An arrangement according to Claim 1, characterised in that the winding frame (1 ) can be rotated about a vertical axle (2).

3. An arrangement according to Claims 1 and 2, characterised in that the supporting surfaces (5) on the winding frame (1) are arranged to run horizontally in a radial direction.

4. An arrangement according to at least one of the foregoing claims, characterised in that the winding frame (1) is constructed from tubes (3) as an open body.

5. An arrangement according to at least one of the foregoing claims, characterised in that the winding frame (1) has a diameter of about 1m - 3.5m.

6. An arrangement according to at least one of the foregoing claims, characterised in that working apertures (27), closable by flaps (17), are provided in the protective wall (16).

7. An arrangement according to at least one of the foregoing claims, characterised in that an unrolling table (18) is provided, on which the hose roll (6a) of the fire hose (6) to be tested is placed before its winding onto the winding frame (1).

8. An arrangement according to at least one of the foregoing claims, characterised in that means are provided on the unrolling table (18), so that the unrolling table (18) can move parallel to its longitudinal axis in synchronism with the winding movement of the winding frame (1).

9. An arrangement according to at least one of the foregoing claims, characterised in that means are provided on the unrolling table (18), so that the unrolling table (18) can be lowered in synchronism with the winding movement of the winding frame (1).

10. An arrangement according to at least one of the foregoing claims, characterised in that a high pressure washing facility (28) is arranged before the winding frame (1 ) for the fire hose (6) to be wound on and tested.

11. An arrangement according to at least one of the foregoing claims, characterised in that an unwinding facility (25) is provided, via which the fire hose (6) is guided into a storage bin (26) on being unwound from the winding frame (1).

12. An arrangement according to at least one of the foregoing claims, characterised in that a test water container with a filling nozzle (13) for the fire hose (6) is provided, on which a test pump (14) is arranged, by means of which water under pressure can be forced into the fire hose (6) connected to it.

## Revendications

1. Dispositif servant à vérifier des tuyaux d'incendie (6) avec un logement pour le tuyau, une pompe de contrôle (14), et un ajutage de remplissage (13) pour un accouplement (12) du tuyau d'incendie (6), servant à raccorder le tuyau et à le remplir d'eau sous pression, caractérisé en ce que le logement pour le tuyau est constitué sous la forme d'un corps d'enroulement (1), qui est pourvu sur son pourtour extérieur de surfaces d'appui (5), formant une spirale, qui sont disposées dans le plan d'enroulement des tuyaux d'incendie (6) à enrouler, et en ce qu'il y a une paroi de protection (16) en matière transparente pour entourer le corps d'enroulement (1).

2. Dispositif selon la revendication 1, caractérisé en ce que l'on peut faire tourner le corps d'enroulement (1) autour d'un axe vertical (2).

3. Dispositif selon les revendications 1 et 2, caractérisé en ce que les surfaces d'appui (5) sont disposées de façon à s'étendre horizontalement dans le sens radial sur le corps d'enroulement (1).

4. Dispositif selon au moins l'une des revendications précédentes, caractérisé en ce que le corps d'enroulement (1) est constitué sous la forme d'un corps ouvert formé de tubes (3).

5. Dispositif selon au moins l'une des revendications précédentes, caractérisé en ce que le corps d'enroulement (1) a un diamètre d'environ 1 m à 3,5 m.

6. Dispositif selon au moins l'une des revendications précédentes, caractérisé en ce que l'on prévoit dans la paroi de protection (16) des ouvertures de travail (27), qui peuvent être fermées par des clapets (17).

7. Dispositif selon au moins l'une des revendications précédentes, caractérisé en ce que l'on prévoit une table de déroulement (18), sur laquelle on dépose le rouleau (6a) des tuyaux d'incendie à examiner (6) avant l'enroulement sur le corps d'enroulement (1).

8. Dispositif selon au moins l'une des revendications précédentes, caractérisé en ce que des moyens sont associés à la table de déroulement (18) de telle sorte que la table de déroulement (18) fonctionne de façon synchrone avec le mouvement du corps d'enroulement (1) parallèlement à son axe longitudinal.

9. Dispositif selon au moins l'une des revendications précédentes, caractérisé en ce que des moyens sont associés à la table de déroulement (18) de telle sorte que la table de déroulement (18) puisse être abaissée de façon synchrone avec le mouvement du corps d'enroulement (1).

10. Dispositif selon au moins l'une des revendications précédentes, caractérisé en ce que l'on dispose avant le corps d'enroulement (1) un dispositif de lavage à haute pression (28) pour les tuyaux d'incendie (6) à enrouler et à examiner.

11. Dispositif selon au moins l'une des revendications précédentes, caractérisé en ce que l'on prévoit au moins un dispositif de déroulement (25), au moyen duquel on dirige dans une caisse de décharge (26) les tuyaux d'incendie (6) lors du déroulement à partir du corps d'enroulement (1).

12. Dispositif selon au moins l'une des revendications précédentes, caractérisé en ce que l'on prévoit un réservoir d'eau pour le contrôle avec un ajutage de remplissage (13) pour les tuyaux d'incendie (6), sur lequel est disposé une pompe de contrôle (14), au moyen de laquelle on peut comprimer de l'eau dans les tuyaux d'incendie (6) raccordés.
